# EUROPÄISCHE PATENTANMELDUNG

(11) **EP 4 325 243 A1**
(43) Veröffentlichungstag der Anmeldung: **21.02.2024**
(21) Anmeldenummer: 22190918.7
(22) Anmeldetag: 18.08.2022
(51) Int. Cl.: G01S 7/481, G01S 17/00, G01S 17/08, G01S 17/89, B60S 1/02, G02B 27/00, G01S 7/521, G01S 13/08, G01S 15/08, G01S 7/497, G01S 7/52

(54) **SENSOR ZUR EMISSION UND ZUM EMPFANG VON DETEKTIONSSTRAHLEN MIT GEHÄUSEINTERNEN BEHEIZUNGSMITTELN**

(71) Anmelder: Leuze electronic GmbH + Co. KG, 73277 Owen/Teck (DE)
(72) Erfinder: Müller, Thomas, 73119 Zell u.A. (DE); Dümmel, Thomas, 72584 Hülben (DE); Bihr, Ralf, 83278 Traunstein (DE)
(74) Vertreter: Ruckh, Rainer Gerhard

(57) **Zusammenfassung**

Die Erfindung betrifft einen Sensor (1) mit wenigstens einem Gehäuse (2), in welchem Sensorkomponenten und Elektronikkomponenten integriert sind. Die Sensorkomponenten sind zum Aussenden und/oder Empfangen von Detektionsstrahlen ausgebildet, wobei die Detektionsstrahlen durch eine Frontscheibe (18) in einer Wand des Gehäuses (2) geführt sind. Die Elektronikkomponenten sind zur Steuerung der Sensorkomponenten und/oder zur Auswertung von Sensorsignalen von Sensorkomponenten ausgebildet. Im Gehäuse (2) sind eine Wärmequelle und Luftführungsmittel vorhanden, mittels derer ein gerichteter Warmluftstrom (23) generiert wird, der ein Beheizungsmittel bildet.

## Beschreibung

Die Erfindung betrifft einen Sensor gemäß dem Oberbegriff des Anspruchs 1.

Derartige Sensoren dienen allgemein zur Objekterfassung oder zur Objektidentifizierung. Der jeweilige Sensor umfasst wenigstens ein Gehäuse, in welchem Sensorkomponenten zur Emission und zum Empfang von Detektionsstrahlen sowie Elektronikkomponenten zur Steuerung der Sensorkomponenten sowie zur Auswertung von Sensorsignalen von Sensorkomponenten vorgesehen sind.

In einer Wand des Gehäuses ist eine Frontscheibe vorgesehen, durch welche die Detektionsstrahlen geführt sind.

Die Sensoren können insbesondere als optische Sensoren ausgebildet sein, die als Sensorkomponenten Lichtstrahlen emittierende Sender und Lichtstrahlen empfangende Empfänger aufweisen.

Die Sensoren werden in unterschiedlichen Applikationen eingesetzt, insbesondere auch in Umgebungen, in welchen tiefe Temperaturen vorhanden sind.

Niedrige Außentemperaturen können dazu führen, dass Elektronikkomponenten wie z.B. Prozessoren nicht mehr oder nicht mehr fehlerfrei arbeiten, da diese nur bei definierten Betriebstemperaturen fehlerfrei arbeiten.

Nicht nur elektronische Bauteile, sondern auch optische und mechanische Bauteile können durch tiefe Außentemperaturen in ihrer Funktion beeinträchtigt werden.

Ein Beispiel hierfür ist das Beschlagen der Frontscheibe des Gehäuses. Dies ist besonders nachteilig bei optischen Sensoren, da bei einem Beschlagen der Frontscheibe die Lichtstrahlen stark beeinträchtigt werden, wenn sie durch die Frontscheibe geführt werden.

Um derartige Beeinträchtigungen zu vermeiden, ist es bekannt, auf zu heizenden Komponenten Heizelemente aufzubringen, damit über Wärmeleitung vom Heizelement zu der jeweiligen Komponente diese beheizt wird.

Nachteilig hierbei ist, dass eine derartige Beheizung in der Sensorkonstruktion berücksichtigt werden muss, insbesondere wenn mehrere Heizelemente wärmeleitend mit zu beheizenden Komponenten verbunden werden müssen. Werden Heizelemente an der zu beheizenden Frontscheibe angebracht, besteht die Gefahr, dass das Sichtfeld des Sensors dadurch eingeschränkt wird, was insbesondere bei einem Sensor in Form eines optischen Sensors der Fall ist. Beispielsweise blockieren auf der Frontscheibe angebrachte Heizbahnen den Durchtritt der Lichtstrahlen.

Weiterhin ist der Wirkungsgrad derartiger wärmeleitender Heizelemente begrenzt. Beispielsweise wird bei Heizungen in Form von Heizbahnen auf der Frontscheibe eine unerwünscht lange Zeit zum Abtauen der Frontscheibe benötigt. Zudem können derartige Heizbahnen oftmals nicht auf Frontscheiben aus Kunststoff aufgebracht werden, da diese durch das Beheizen beeinträchtigt oder beschädigt werden. Dafür müssen teurere Frontscheiben aus Glas eingesetzt werden, was die Herstellkosten des Sensors erhöht.

Weiterhin ist es bekannt eine ungerichtete Konvektion im Gehäuse für die Beheizung von Komponenten des Sensors zu nutzen. Ein Beispiel hierfür ist ein optischer Sensor in Form eines Barcodelesers. Der Barcodeleser weist neben einen Lichtstrahlen emittierenden Sender und einem Lichtstrahlen empfangenden Empfänger eine Ablenkeinheit in Form eines motorisch getriebenen Polygonspiegelrad auf. Die Rotation des Polygonspiegelrads sorgt für die Generierung eines Luftstromes. Dieser Luftstrom ist jedoch ungerichtet. Zwar kann mit dem Luftstrom Wärme transportiert werden. Da dieser ungerichtet ist, ist damit kein gezieltes Beheizen einzelner Komponenten im Gehäuse möglich. Vielmehr wird mit dem Luftstrom Wärme innerhalb des Gehäuses unkontrolliert verteilt.

Der Erfindung liegt die Aufgabe zugrunde, eine effiziente Heizung für einen Sensor der eingangs genannten Art bereitzustellen.

Zur Lösung dieser Aufgabe sind die Merkmale des Anspruchs 1 vorgesehen. Vorteilhafte Ausführungsformen und zweckmäßige Weiterbildungen sind in den abhängigen Ansprüchen beschrieben.

Die Erfindung betrifft einen Sensor mit wenigstens einem Gehäuse, in welchem Sensorkomponenten und Elektronikkomponenten integriert sind. Die Sensorkomponenten sind zum Aussenden und/oder Empfangen von Detektionsstrahlen ausgebildet, wobei die Detektionsstrahlen durch eine Frontscheibe in einer Wand des Gehäuses geführt sind. Die Elektronikkomponenten sind zur Steuerung der Sensorkomponenten und/oder zur Auswertung von Sensorsignalen von Sensorkomponenten ausgebildet. Im Gehäuse sind eine Wärmequelle und Luftführungsmittel vorhanden, mittels derer ein gerichteter Warmluftstrom generiert wird, der ein Beheizungsmittel bildet.

Besonders vorteilhaft wird der gerichtete Warmluftstrom durch eine erzwungene Konvektion generiert.

Mit dem insbesondere durch eine erzwungene Konvektion generierten, gerichteten Warmluftstrom können gezielt einzelne Komponenten des Sensors beheizt werden.

Da der Warmluftstrom gezielt auf zu beheizende Komponenten gerichtet wird, wird ein hoher Wirkungsgrad der Heizung erzielt. Die von der Wärmequelle generierte Wärme wird mit dem Warmluftstrom gezielt nur zur Beheizung der Komponenten genutzt und damit Wärme nicht unkontrolliert im Gehäuse verteilt. Damit können die Komponenten auch schnell aufgeheizt werden, so dass auch bei tiefen Außentemperaturen der Sensor schnell in vollem Umfang betriebsbereit ist.

Dies gilt insbesondere für im Gehäuse vorhandene Prozessoren, die durch die erfindungsgemäße Beheizung schnell auf Betriebstemperatur hochgeheizt werden können.

Zudem kann die Frontscheibe des Gehäuses schnell abgetaut werden, so dass ein Beschlagen der Frontscheibe vermieden wird. Zudem können teure Heizbahnen auf der Frontscheibe, die das Sichtfeld des Sensors einschränken würden, vermieden werden.

Weiterhin vorteilhaft ist, dass durch die kontaktfreie Beheizung der Frontscheibe für diese keine Materialrestriktionen bestehen. Insbesondere kann die Frontscheibe aus kostengünstigem Kunststoff bestehen. Zudem kann auch ein Polarisationsfilter auf der Frontscheibe auflaminiert werden.

Ein wesentlicher Vorteil der Erfindung besteht weiterhin darin, dass durch eine gezielte Beheizung von Elektronikkomponenten oder Optikelementen für diese auch bei tiefen Außentemperaturen ein geringer Temperaturunterschied vorhanden ist. Damit können Toleranzfenster für diese Elektronikkomponenten oder Optikelemente eingeschränkt werden, was den Einsatz kostengünstiger Bauteile ermöglicht.

Der erfindungsgemäße Sensor kann prinzipiell in Form eines Radarsensors oder Ultraschallsensors ausgebildet sein.

Besonders vorteilhaft ist, der Sensor ein optischer Sensor. In diesem Fall sind in dessen Gehäuse wenigstens ein Lichtstrahlen emittierender Sender, wenigstens ein Lichtstrahlen empfangender Empfänger und eine von Elektronikkomponenten gebildete Auswerteeinheit zur Auswertung von Empfangssignalen des Empfängers vorhanden.

Der optische Sensor kann prinzipiell nur ein Gehäuse aufweisen.

Der optische Sensor kann dann beispielsweise ein Lichttaster, ein Distanzsensor, ein scannender Distanzsensor, ein Codeleser oder ein Kamerasensor sein.

Prinzipiell können auch optische Sensoren mit mehreren, insbesondere zwei Gehäusen vorgesehen sein. Beispiele hierfür sind Lichtschranken oder Lichtvorhänge.

Gemäß einer vorteilhaften Ausführungsform weist die Luftführungsmittel einen Lüfter, einen Ventilator, einen Propeller und/oder eine Düse auf.

Mit diesen Luftführungsmitteln wird eine erzwungene Konvektion generiert, d.h. von einer Wärmequelle generierte Wärme wird dazu genutzt, einen gerichteten Warmluftstrom zu erzwingen mit dem gezielt und lokal Komponenten des Sensors im Gehäuse beheizt werden können.

Besonders vorteilhaft wird mittels der Luftführungsmittel ein zirkulierender Warmluftstrom generiert.

Dabei wird mittels der Luftführungsmittel ein Zuluftstrom und ein Rückluftstrom generiert, welche voneinander getrennt sind.

Dies stellt eine besonders effiziente Luftführung dar, die auch ein Beheizen mehrerer entfernt angeordneter Komponenten im Gehäuse ermöglicht.

Durch den Rückluftstrom wird der Warmluftstrom wieder zurück zu den Luftführungsmitteln geführt, wodurch eine besonders effiziente Luftführung erzielt wird.

Vorteilhaft wird mittels im Gehäuse vorhandener Bauteile der Zuluftstrom vom Rückluftstrom getrennt.

Dadurch sind keine separaten Bauteile zur Trennung des Zuluftstroms vom Rückluftstrom erforderlich.

Besonders vorteilhaft sind Mittel zur Regelung des Warmluftstroms vorgesehen.

Damit kann der Warmluftstrom an die jeweiligen Erfordernisse angepasst werden. Insbesondere kann die Stärke des Warmluftstroms an die räumlichen Gegebenheiten im Gehäuse des Sensors angepasst werden.

Für die Regelung des Warmluftstroms ist eine geeignete Steuerung vorgesehen, die das die Konvektion erzwingende Bauteil ansteuert und mit Energie versorgt.

Die Regelung kann besonders über ein Tachosignal des die Konvektion erzwingenden Bauteils erfolgen.

Gemäß einer vorteilhaften Ausgestaltung kann die Wärmequelle von einem Heizelement gebildet sein, das vorteilhaft innerhalb des Gehäuses ortsfest angeordnet ist.

Derartige Heizelemente können beispielsweise von Heizwiderständen, Transistoren oder dergleichen gebildet sein.

Alternativ oder zusätzlich kann die Wärmequelle von Elektronikkomponenten des Sensors gebildet sein.

Hierfür eignen sich elektronische Bauteile wie z.B. Prozessoren, die besonders viel Wärme generieren.

Gemäß einer weiteren Ausgestaltung ist als Wärmequelle ein externes Heizmodul vorgesehen.

Beispielsweise kann das externe Heizmodul einen Deckel des Gehäuses ersetzen.

In diesem Fall kann der Deckel vom Gehäuse abgenommen werden und dort das externe Heizmodul aufgesetzt werden, falls Bedarf zur Beheizung des Innenraums des Gehäuses besteht. Die Abmessungen des externen Heizmoduls sind dann entsprechend der Abmessungen des Deckels gewählt, so dass auch das externe Heizmodul das Gehäuse dicht abschließt.

Gemäß einer vorteilhaften Ausführungsform ist als Wärmequelle ein externes Heizmodul vorgesehen.

Der Wärmetauscher ist ein Wärmeüberträger. Mit diesem kann der Ort der Wärmeerzeugung variiert werden, um insbesondere die Wärme besser in den Luftstrom, der mit den Luftführungsmitteln erzeugt wird, zu bringen.

Gemäß einer vorteilhaften Ausgestaltung ist die Heizleistung der Wärmequelle steuerbar oder regelbar.

Vorteilhaft ist die Heizleistung abhängig von Temperaturwerten, die mit einem Temperatursensor an oder innerhalb des Gehäuses erfasst werden, steuerbar oder regelbar.

Damit ist insbesondere eine Anpassung an äußere Umgebungsbedingungen möglich. So kann die Heizleistung bei steigenden Umgebungstemperaturen reduziert werden.

Mit der erfindungsgemäßen Heizung können gezielt Sensorkomponenten und/oder Elektronikkomponenten beheizt werden.

Besonders vorteilhaft wird mittels des Warmluftstroms die Frontscheibe beheizt.

Dadurch kann ein Beschlagen der Frontscheibe verhindert werden.

Weiterhin können mittels des Warmluftstroms Sensorkomponenten und/oder Strahlformungsmittel und/oder Strahlumlenkmittel beheizt werden.

Schließlich können Anzeigemittel des Sensors mit dem Warmluftstrom beheizt werden. Die Anzeigemittel können z.B. von farbigem Licht abstrahlenden Leuchtdioden gebildet sein, die im Bereich einer Gehäusewand des Gehäuses des Sensors installiert sind.

Die Erfindung wird im Folgenden anhand der Zeichnungen erläutert. Es zeigen:
- Figur 1:: Ausführungsbeispiel des erfindungsgemäßen Sensors.
- Figur 2:: Darstellung der Komponenten des Sensors ohne Gehäuseoberteil.

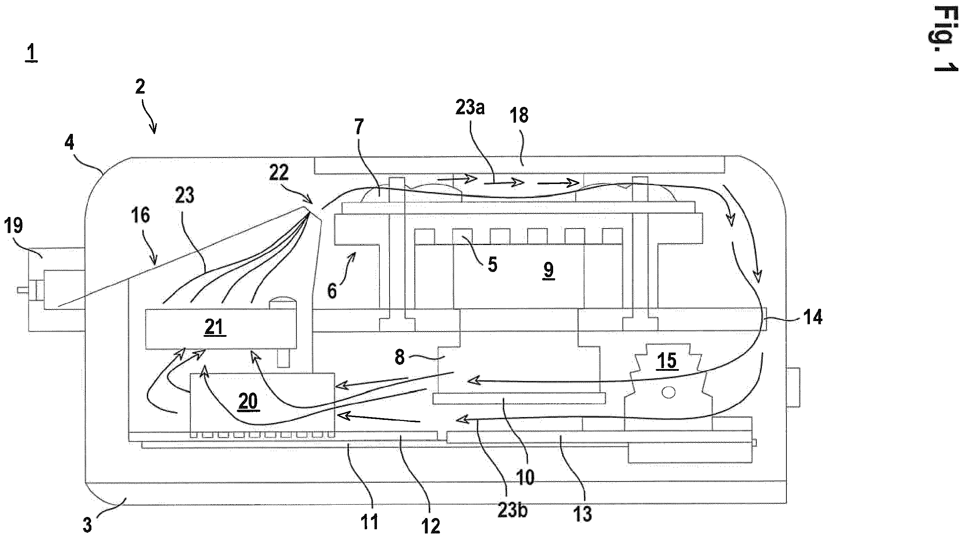

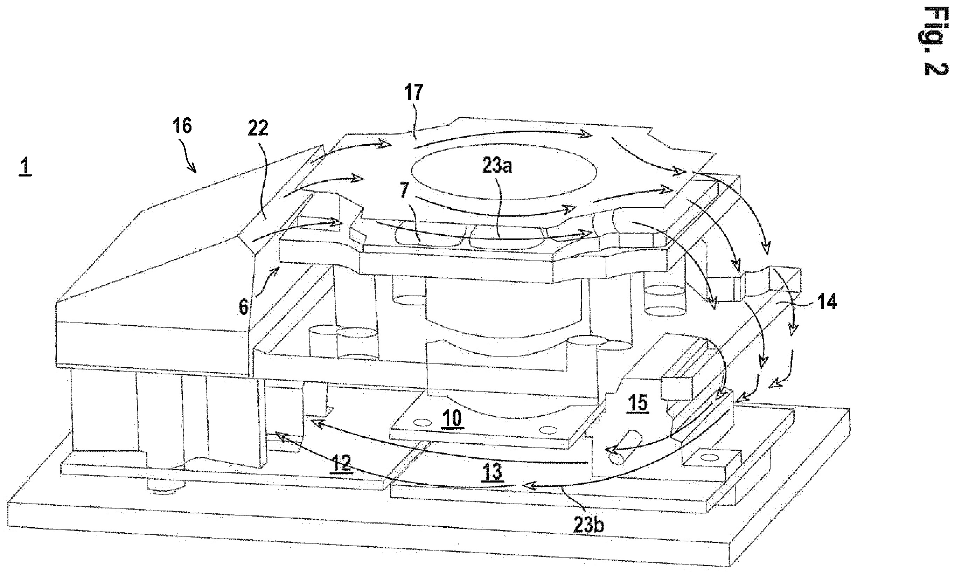

Die Figuren 1 und 2 zeigen ein Ausführungsbeispiel des erfindungsgemäßen Sensors 1. Der Sensor 1 kann als Radarsensor oder Ultraschallsensor ausgebildet sein. Im vorliegenden Fall ist der Sensor 1 als optischer Sensor 1 ausgebildet.

Die Komponenten des Sensors 1 sind in bzw. an einem Gehäuse 2 integriert. Das Gehäuse 2 umfasst eine Gehäusegrundplatte 3, auf welcher Sensorkomponenten und Elektronikkomponenten des optischen Sensors 1 gelagert sind. Auf diese Gehäusegrundplatte 3 wird ein Gehäuseoberteil 4 aufgesetzt und befestigt, wodurch ein geschlossenes Gehäuse 2 erhalten wird.

Der optische Sensor 1 ist im vorliegenden Fall als Kamerasensor ausgebildet. Dieser Kamerasensor weist eine Anordnung von Lichtstrahlen emittierenden Sendern 5 auf, die hinter einer Linsenplatte 6 angeordnet sind, deren Linsenelemente 7 zur Strahlformung der Lichtstrahlen dienen. Die Linsenelemente 7 mit den Sendern 5 bilden eine ringförmige Anordnung, die eine Empfängeranordnung mit einem Empfänger 8 mit vorgeordnetem Objektiv 9 umschließen. Der Empfänger 8 ist in einem Bildsensor gebildet, der aus einem matrixförmigen CMOS oder CCD-Array bestehen kann.

Der Empfänger 8 sitzt auf einer Leiterplatte 10 auf, die mit einer weiteren Leiterplatte 11 auf der Gehäusegrundplatte 3 leitend verbunden ist. Auf der Leiterplatte 11 der Gehäusegrundplatte 3 sind weitere Plattenelemente 12, 13 gelagert.

Die Empfängeranordnung ist in einem Chassis 14 gelagert und lagestabilisiert. Der gegenüberliegende Rand des Chassis 14 ist an einer Umhausung 16 als Bestandteil von Luftführungsmitteln gelagert.

Der Linsenplatte 6 ist ein Polarisationsfilter 17 zur Polarisation der Lichtstrahlen vorgeordnet.

In einer Frontwand des Gehäuseoberteils 4 befindet sich eine transparente Frontscheibe 18. Die von den Sendern 5 emittierten Lichtstrahlen werden durch die Frontscheibe 18 in einen Überwachungsbereich geführt. Die an einem Objekt reflektierten Lichtstrahlen werden durch die Frontscheibe 18 zurück zum Empfänger 8 geführt. In einer Auswerteeinheit, deren Komponenten auf der Leiterplatte 11 angeordnet sind, wird abhängig von den Empfangssignalen des Empfängers 8 ein Ausgangssignal generiert, das über einen Anschluss 19 im Gehäuse 2 ausgegeben wird. Der Anschluss 19 ist als Steckeranschluss ausgebildet und dient auch zum Anschließen an eine Spannungsversorgung.

Erfindungsgemäß ist in dem Gehäuse 2 des optischen Sensors 1 eine Heizung mit einer Wärmequelle und zugeordneten Luftführungsmitteln vorgesehen. Als Luftführungsmittel kann ein Ventilator 21 vorgesehen sein. Die Wärmequelle besteht im vorliegenden Fall aus einem Wärme genierenden Heizelement 20 mit einem wärmeübertragenden Wärmetauscher.

Die Komponenten der Wärmequellen sitzen auf den Leiterplatten 10, 11 auf oder sind mit diesen verbunden. Elektronikkomponenten auf den Leiterplatten 10, 11 steuern die Wärmequellen und versorgen sie mit Energie. Abhängig von Temperatursignalen wenigstens eines Temperatursensors (nicht dargestellt), der in oder am Gehäuse 2 angeordnet ist, kann die Heizleistung der Wärmequellen gesteuert oder geregelt werden.

Die Komponenten der Wärmequelle befinden sich im Innenraum der Umhausung 16, die einen Bestandteil der Luftführungsmittel bilden. Die Umhausung 16 verjüngt sich zu deren oberem Ende hin, wo in einer Öffnung der Umhausung 16 eine Düse 22 als weiteres Luftführungsmittel gelagert ist.

Durch die Form der Umhausung 16 und durch die Düse 22 wird ein mit der Wärmequelle aufgeheizter gerichteter Warmluftstrom 23 generiert. Der aus der Düse 22 austretende Warmluftstrom 23 bildet einen Zuluftstrom 23a mit dem die Frontscheibe 18 gezielt beheizt wird, so dass sie auch bei niedrigen Außentemperaturen nicht beschlägt.

An einer Gehäusewand erfolgt die Umlenkung des Warmluftstroms 23, wodurch ein Rückluftstrom 23b erhalten wird. Der Rückluftstrom 23b ist im Bereich der Leiterplatte 11 geführt, so dass mit dem Rückluftstrom 23b dort vorhandene Elektronikkomponente beheizt werden. Schließlich wird der Rückluftstrom 23b zur Wärmequelle zurückgeführt, wodurch ein zirkulierender Warmluftstrom 23 generiert wird. Der Rückluftstrom 23b ist dabei vom Zuluftstrom 23a durch das Chassis 14 getrennt.

### B ezugszei chenli ste

- (1): Sensor
- (2): Gehäuse
- (3): Gehäusegrundplatte
- (4): Gehäuseoberteil
- (5): Sender
- (6): Linsenplatte
- (7): Linsenelement
- (8): Empfänger
- (9): Objektiv
- (10): Leiterplatte
- (11): Leiterplatte
- (12): Plattenelement
- (13): Plattenelement
- (14): Chassis
- (16): Umhausung
- (17): Polarisationsfilter
- (18): Frontscheibe
- (19): Anschluss
- (20): Heizelement + Wärmetauscher
- (21): Ventilator
- (22): Düse
- (23): Warmluftstrom
- (23a): Zuluftstrom
- (23b): Rückluftstrom

## Patentansprüche

1. Sensor (1) mit wenigstens einem Gehäuse (2), in welchem Sensorkomponenten und Elektronikkomponenten integriert sind, wobei die Sensorkomponenten zum Aussenden und/oder Empfangen von Detektionsstrahlen ausgebildet sind, wobei die Detektionsstrahlen durch eine Frontscheibe (18) in einer Wand des Gehäuses (2) geführt sind, und wobei die Elektronikkomponenten zur Steuerung der Sensorkomponenten und/oder zur Auswertung von Sensorsignalen von Sensorkomponenten ausgebildet sind, **dadurch gekennzeichnet, dass** im Gehäuse (2) eine Wärmequelle und Luftführungsmittel vorhanden sind, mittels derer ein gerichteter Warmluftstrom (23) generiert wird, der ein Beheizungsmittel bildet.

2. Sensor (1) nach Anspruch 1, **dadurch gekennzeichnet, dass** der gerichtete Warmluftstrom (23) durch eine erzwungene Konvektion generiert wird.

3. Sensor (1) nach einem der Ansprüche 1 oder 2, **dadurch gekennzeichnet, dass** dieser ein optischer Sensor ist.

4. Sensor (1) nach Anspruch 3, **dadurch gekennzeichnet, dass** in dessen Gehäuse (2) wenigstens ein Lichtstrahlen emittierender Sender (5), wenigstens ein Lichtstrahlen empfangender Empfänger (8) und eine von Elektronikkomponenten gebildete Auswerteeinheit zur Auswertung von Empfangssignalen des Empfängers (8) vorhanden sind.

5. Sensor (1) nach einem der Ansprüche 1 bis 4, **dadurch gekennzeichnet, dass** die Luftführungsmittel einen Lüfter, einen Ventilator (21), einen Propeller und/oder eine Düse (22) aufweisen.

6. Sensor (1) nach einem der Ansprüche 1 bis 5, **dadurch gekennzeichnet, dass** mittels der Luftführungsmittel ein zirkulierender Warmluftstrom (23) generiert wird.

7. Sensor (1) nach Anspruch 6, **dadurch gekennzeichnet, dass** mittels der Luftführungsmittel ein Zuluftstrom (23a) und ein Rückluftstrom (23b) generiert wird, welche voneinander getrennt sind.

8. Sensor (1) nach Anspruch 7, **dadurch gekennzeichnet, dass** mittels im Gehäuse (2) vorhandener Bauteile der Zuluftstrom (23a) vom Rückluftstrom (23b) getrennt wird.

9. Sensor (1) nach einem der Ansprüche 1 bis 8, **dadurch gekennzeichnet, dass** Mittel zur Regelung des Warmluftstroms (23) vorgesehen sind.

10. Sensor (1) nach einem der Ansprüche 1 bis 8, **dadurch gekennzeichnet, dass** die Wärmequelle von wenigstens einem Heizelement (20) gebildet ist.

11. Sensor (1) nach einem der Ansprüche 1 bis 9, **dadurch gekennzeichnet, dass** die Wärmequelle von Elektronikkomponenten gebildet ist.

12. Sensor (1) nach einem der Ansprüche 1 bis 11, **dadurch gekennzeichnet, dass** als Wärmequelle ein externes Heizmodul vorgesehen ist.

13. Sensor (1) nach Anspruch 12, **dadurch gekennzeichnet, dass** das externe Heizmodul einen Deckel des Gehäuses (2) ersetzt.

14. Sensor (1) nach einem der Ansprüche 1 bis 13, **dadurch gekennzeichnet, dass** der Wärmequelle ein Wärmetauscher (20) zugeordnet ist.

15. Sensor (1) nach einem der Ansprüche 1 bis 14, **dadurch gekennzeichnet, dass** die Heizleistung der Wärmequelle steuerbar oder regelbar ist.

16. Sensor (1) nach Anspruch 15, **dadurch gekennzeichnet, dass** die Heizleistung abhängig von Temperaturwerten, die mit einem Temperatursensor an oder innerhalb des Gehäuses (2) erfasst werden, steuerbar oder regelbar ist.

17. Sensor (1) nach einem der Ansprüche 1 bis 16, **dadurch gekennzeichnet, dass** mittels des Warmluftstroms (23) die Frontscheibe (18) beheizt wird.

18. Sensor (1) nach einem der Ansprüche 1 bis 17, **dadurch gekennzeichnet, dass** mittels des Warmluftstroms (23) Sensorkomponenten und/oder Strahlformungsmittel und/oder Strahlumlenkmittel beheizt werden.

19. Sensor (1) nach einem der Ansprüche 1 bis 18, **dadurch gekennzeichnet, dass** in oder an dessen Gehäuse (2) Anzeigemittel vorgesehen sind, die mittels des Warmluststroms (23) beheizt werden
